# EUROPEAN PATENT APPLICATION

(11) **EP 3 029 924 A1**
(43) Date of publication of application: **08.06.2016**
(21) Application number: 15196540.7
(22) Date of filing: 26.11.2015
(51) Int. Cl.: H04N 1/46

(54) **METHOD FOR CONVERTING A FIRST COLOUR IMAGE INTO A SECOND COLOUR IMAGE, CAMERA SYSTEM AND MOTOR VEHICLE**

(30) Priority: 02.12.2014 DE 102014117711
(71) Applicant: Connaught Electronics Ltd., Tuam, County Galway (IE)
(72) Inventor: McDonald, John, Dr., Galway, County Galway (IE); Jain, Deepak-Kumar, Tuam, County Galway, - (IE); McDonald, James, Dr., Galway, County Galway (IE); Borbely, Paul, Tuam, County Galway, - (IE)
(74) Representative: Jauregui Urbahn, Kristian

(57) **Abstract**

The invention relates to a method for converting a first colour image (7) into a second colour image (14), wherein as first colour image (7) an environmental area (6) of a motor vehicle (1) is captured by a camera (3) of the motor vehicle (1), and of the first colour image (7) a bit (9), which contributes to the characterization of a pixel of the first colour image (7) and has a first bit value (10) or a second bit value (11) that differs from the first bit value (10) is determined, wherein during conversion into the second colour image (14) the bit (9) with the first bit value (10) is set as first colour value (16) of a colour pixel (17) of the second colour image (14) and/or the bit (9) with the second bit value (11) is set as second colour value (18) of the colour pixel (17) of the second colour image (14).

## Description

The invention relates to a method for converting a first colour image into a second colour image. As first colour image an environmental area of a motor vehicle is captured by a camera of the motor vehicle. Further, of the first colour image a bit is determined, which contributes to the characterization of a pixel of the first colour image and has a first bit value or a second bit value that differs from the first bit value. The invention moreover relates to a camera system for a motor vehicle as well as a motor vehicle with a camera system.

Methods for converting a first colour image into a second colour image are known from the prior art. For conversion it is envisaged that an image information content of the first colour image is also present in the second colour image. However, the image information content may be encoded in a different way. In the present context, the encoding does not describe encryption within the meaning of cryptography. The encoding or the encoding regulation describes the arrangement of the data of the first colour image and the second colour image for instance within a file. The kind of encoding is commonly recorded in a specification. On the basis of the specification a method can be determined to save and read out the data according to the encoding. For the encoding for instance a change of a data format may be effected. However, for example also a colour model transformation can be performed during conversion of the first colour image into the second colour image. A widely used colour model transformation is for instance the conversion of an image in a YUV colour model into an image in an RGB colour model. Thus, in most cases upon change of the colour model also the file format of the image is changed. In the present case the interest is directed at the data area of an image file, i.e. the actual image or the actual image information in the file.

Commonly, certain data formats are selected to reduce for instance a data file of the colour image. For this purpose a special encoding may be chosen. This is for instance the case with the YUV422 data format. In the case of the YUV422 data format two immediately adjacent pixels share the image information of the U channel and the V channel of the YUV colour model. The image information of the U channel and the V channel each are saved only once for two pixels. These data formats are for instance known by the designation of interleaved data formats. In the case of a non-interleaved or uninterleaved data format each pixel may be assigned a value of its own for each pixel of the respective colour channel of the colour image. Problems occur if an interleaved data format is converted into a non-interleaved data format and is subsequently reconverted into an interleaved data format. After the second conversion the colour image can no longer be determined in the form in which it was present prior to the first conversion. This means that the image information content of the colour image cannot be restored as originally present.

It is the task of the invention to provide a method, a camera system, as well as a motor vehicle with which or in which a plural conversion can be performed with a raised capability of remaining lossless.

According to the invention this task is solved by a method, a camera system, as well as a motor vehicle having the features according to the corresponding independent claims.

In a method according to the invention a first colour image is converted into a second colour image, in particular by means of an image processing unit of a motor vehicle. As first colour image an environmental area of the motor vehicle is captured by a camera of the motor vehicle. Of the first colour image a bit is determined, which at least contributes to the characterization of a pixel of the first colour image and has a first bit value or a second bit value that differs from the first bit value. According to the invention it is envisaged that during conversion into the second colour image the bit with the first bit value is set as first colour value of a colour pixel of the second colour image and/or the bit with the second bit value is set as second colour value of the colour pixel of the second colour image.

The method according to the invention allows for the first colour image to be transformed in such a way that the image information of the first colour image in the second colour image is encoded in such a way that the image information also after a further conversion of the second colour image is maintained without any loss and in particular can be fully restored.

The first colour image and the second colour image comprise in particular a plurality of colour channels. The first colour image and the second colour image are no binary images, in which a colour is described exclusively by the first bit value or the second bit value.

The conversion starts with a bit of the first colour image, in particular of the data area of the first colour image, is determined or selected. The determined bit is set or saved in the second image as colour value. The bit, in case it exhibits the first bit value, is set with the first colour value of the colour pixel of the second colour image and, in case the bit exhibits the second bit value, the second colour value of the pixel of the second colour image is set. By transforming the bits of the first colour image into the colour values of the second colour image, the data quantity or data size of the second colour image in comparison with the first colour image is increased. This means that the second colour image has a larger memory area than the first colour image. In particular, the second colour image exclusively has colour pixels with the first colour value or the second colour value. The image information of the first colour image thus is encoded on the basis of the first colour value and the second colour value in the second colour image. The encoding is saved in particular in binary mode, however not in a binary data format, which envisages only one bit for the colour pixel. With the knowledge about the encoding of the conversion the second colour image can be reconverted into the first colour image. The encoding thus is the rule according to which the bit is set in dependency on the first bit value or the second bit value as the first colour value or the second colour value of the colour pixel of the second image. This means that upon re-conversion the first colour value and/or the second colour value of the respective colour pixel suggests the first bit value and/or the second bit value of the respective bit.

Preferably, it is envisaged that the first colour value of the colour pixel of the second colour image is characterized as a black colour value and/or the second colour value of the colour pixel of the second colour image is characterized as a white colour value. In particular thus in the second colour image only black colour pixels and/or white colour pixels are present. In case that the second colour image is present in a YUV colour model, the black colour value can for instance be determined with 0 for a Y channel of the YUV colour model and 128 for a U channel of the YUV colour model and 128 for a V channel of the YUV colour model. The white colour value in this case can be determined with a value 255 for the Y channel and 128 for the U channel and 128 for the V channel. The example relates to a colour depth of 8 bit. Other colour depths are preferably envisaged, however no colour depth of 1 bit, i.e. no binary image. The advantage of the black colour value and/or the white colour value is to be seen in that these colour values for example upon a conversion of a YUV422 data format into a RGB888 data format and a reconversion of the RGB888 data format into the YUV422 are maintained unchanged. This means that with the black colour value and/or the white colour value a particularly complete and effective reconstruction of the first colour image can be achieved.

In particular, it is envisaged that the colour pixel of the second colour image is characterized by a memory area of at least one byte, in particular that the bit of the first colour image after conversion is characterized by the at least one byte of the second colour image. One byte is a measuring unit and in particular stands for a sequence of 8 bit. Accordingly, the bit can be described by the at least one byte in the second colour image. In the case of the YUV422 data format the bit is characterized for example with a memory area of 2 byte. In the case of the RGB888 data format the bit is for instance characterized by 3 byte. However, preferably manifold data formats are provided, which for instance can have a different colour depth, in particular a greater colour depth, and correspondingly also the number of the bytes of the second colour image required for the characterization of the bit is increased. The number of the at least one byte also affects the size or the data quantity of the second colour image. An advantage of the characterization of the bit by the at least one byte is the fact that the first colour image upon conversion can be restored in a particularly complete way. The memory area in the present case describes in particular the area theoretically claimed by the colour pixel in the case of a memory medium, such as for instance a hard disk and/or a main memory.

Further, it is preferably envisaged that the first colour image is run through bitwise until the bits of the first colour image at least partly is characterized by the respective colour pixels of the second colour image. For instance it may be envisaged that the first colour image is run through or processed bit by bit until all bits of the first colour image each are characterized by corresponding colour pixels of the second colour image. The second colour image in this case then has the same number of colour pixels as the first colour image has bits. This means that it is advantageous that the entire image information of the first colour image can thereby be adopted into the second colour image and thus a complete restoration of the first colour image is facilitated in a particularly effective way.

In a further embodiment it may be envisaged that the first colour image and/or the second colour image is characterized by a plurality of colour channels. The colour channel contains the colour portions of the colour pixel. The colour pixel for instance can be assigned several colour channels. For instance the R channel of an RGB colour model for instance defines how much red is contained in a colour pixel, whilst a G channel of the RGB colour model for example defines how much green is contained in the colour pixel and a B channel of the RGB colour model for example defines how much blue is contained in the colour pixel. Accordingly, the colour pixel of the second colour image may be described by several or by the plurality of the colour channels. It is an advantage that the second image thus can be flexibly adapted to an impending further conversion process. For example in the encoding of the conversion it can also be taken into consideration how many colour channels the first colour image and/or the second colour image comprises. The image information of the first colour image thus can be saved in the second colour image in a particularly complete and restorable way.

Preferably, it is envisaged that the first colour image and/or the second colour image is provided in a YUV colour model and/or in an interleaved data format, in particular a YUV422 data format. The YUV colour model for representing the colour information uses two components, namely luminance, which is described by the Y channel of the YUV colour model, and chrominance, which is described by the U channel of the YUV colour model and the V channel of the YUV colour model. The interleaved data format describes an optimization technique for the data transmission or the data storage. In this connection data are arranged in a certain sequence or with a certain encoding, in order to achieve a raised throughput or a reduced data quantity. Said data format is in particular also referred to as "interleaved" data format. An example for the interleaved data format is the YUV422 data format. In the case of the YUV422 data format each pixel is assigned a value of the Y channel, however two immediately adjacent pixels share the values of the U channel and the V channel. This is possible without compromising considerably on quality, because the human eye is more susceptible to differences in luminance than in colour differences. The YUV colour model and/or the interleaved data format, in particular the YUV422 data format are often output and/or read in by image processing devices and thus increase the scope of influence and applicability of the conversion.

Further, it is preferably envisaged that a first byte of the second colour image for the first colour value is assigned a first byte value or the first byte of the second colour image for the second colour value is assigned a second byte value that differs from the first byte value. For example the first byte, which for instance describes a second colour image, can be assigned the first byte value. The first byte value may for instance be 0, i.e. in bits in the binary number system described as 00000000, or 255, i.e. in bits in the binary number system described as 11111111. This means that the first byte value can be described by 8 bits of the second colour image. This applies both for the first byte value as well as for the second byte value. Thus, the second colour image in the place of the first byte can be such that only the first byte value or the second byte value is present. The second colour image preferably comprises several first bytes. In particular the first byte is in an odd position, if all bytes of the colour image were numbered consecutively. Thus the second colour image can be generated to the effect that the image information of the first colour image is particularly effectively saved for a restoration or a complete retrieval of the image information.

Further, it is preferably envisaged that a second byte of the second colour image is assigned a third byte value, which in terms of its value lies between the first byte value and the second byte value. The second byte may in particular be arranged at an even position number, if the bytes of the second colour image would be numbered consecutively. The second byte thus equally occurs in particular several times in the second colour image. The third byte value of the second byte may for instance be 128, i.e. a value that is described in bits of the second colour image in the binary number system by 10000000. By the second byte the second colour image can be described or saved in a particularly effective way in an interleaved data format, in particular in a YUV422 data format.

Further, it is preferably envisaged that the third byte value is characterized by a predetermined constant. The third byte value, which for instance is envisaged for the second byte, can be set as the constant or the immutable value. The constant then is for instance set before the beginning of the conversion and thus forms part of the encoding for the conversion. This means that the consequence may be that the second byte is set invariably with the same value, regardless of the condition of the first colour image. Again, an encoding of the conversion that is particularly easily traced back, whereby the image information content of the first colour image is particularly effective and complete, is advantageous.

In a further embodiment it is in particular envisaged that the second colour image is generated by first adding the first byte in a data area of the second colour image and immediately adjacent the second byte to the data area. This means for instance that the second colour image is generated by first adding the first byte with the first byte value or the second byte value and immediately adjacent thereto the second byte with the third byte value. Adjacent thereto, again, it can be continued with the next first byte, adjacent to which the next second byte is appended. Thus, the bit of the first colour image is determined, which in particular is arranged in the first position of the first colour image, and on the basis of the bit the first byte value or the second byte value is identified, which then is arranged in the form of the first byte in the first the position of the second colour image. Adjacent to the first byte irrespective of the bits of the first colour image in the second colour image a second byte is added, which has the third byte value. In case not all bits of the first colour image have been run through, for instance the bit in the second position of the first colour image is determined and accordingly the first byte in the third position of the second colour image determined. This way of proceeding is particularly advantageous, if the second colour image is present in an interleaved data format, in particular in a YUV422 data format, because then the entire image information of the first colour image can be saved in the respective first byte of the second colour image, i.e. in the Y channel of the second colour image. Then the U channel and the V channel in the second colour image can each be occupied with the second byte value, i.e. in particular the constant. This means thereby a solution is provided for saving the image information of the first colour image in the second colour image in such a way that the image information in the data area of the first colour image is maintained or can be restored also in the case of multiple conversion into various data formats.

In particular, it is envisaged that the first colour image is run through bitwise and that the respective bit of the first colour image is added as the respective first byte of the second colour image to the second colour image. This means for instance that the first colour image is run through or processed bit by bit and the respective bit is added as the corresponding respective first byte to the second colour image. Accordingly the bit is characterized by the first byte value or the second byte value of the first byte. In particular the second byte is thus not required for the characterization of the first colour image. The arrangement of the first byte and/or the second byte in the second colour image, however, is random, however preferably of such kind that the first byte and the second byte in the second colour image alternate, starting with the first byte. Thus, the second colour image can be composed in such a way that the first byte is added, then the second byte is added, then a further first byte is added, and a further second byte is added. As already mentioned, then the respective first byte is positioned in an odd position of the byte places of the second colour image and the second byte is positioned in an even position of the byte places of the second colour image. In order to identify the byte places, the second colour image is set up as vector. The advantage consequently is that thereby the entire first colour image is run through and thus the entire image information of the first colour image can be saved in the second colour image, in order to be able to regain or restore the entire image information of the first colour image from the second colour image or a second colour image that has been converted several times.

In a further embodiment of the invention it is for instance envisaged that the second colour image upon conversion of the first colour image into the second colour image is transformed into an RGB colour model and/or into an RGB888 data format. The transformation of the second colour image into the RGB colour model and/or the RGB888 data format is a further conversion. The RGB888 data format is a non-interleaved data format. This means it is advantageous that, if the second colour image is converted into the RGB888 data format, a re-conversion for instance into an interleaved data format is possible without a loss of data or a loss of image information occurring. Accordingly, the image information of the first colour image can in particular also be restored if the second colour image upon conversion undergoes a further conversion into the RGB888 data format. Thus the second colour image provides the image information of the first colour image or the bits of the first colour image in a particularly effective way for a secure further conversion or transformation.

Further, it is preferably envisaged that the second colour image after conversion of the first colour image into the second colour image on the basis of an encoding regulation is re-converted into the first colour image. The encoding regulation provides a rule by which the first colour image is converted into the second colour image and/or by which the first colour image can be re-converted from the second colour image, in particular without any loss. The conversion therefore is effected particularly preferably in such a way that the converted image information is prepared and provided to be capable of being easily traced back to its original image information. The re-converting consequently means that on the basis of the second colour image or a further colour image, which derives from a further conversion of the second colour image, the first colour image in particular is restored. The further conversion describes in particular the change of a data format, in particular an image data format. This means that this embodiment in a particularly advantageous way facilitates fully regaining the first colour image even after an at least once effected conversion of the first colour image into a second colour image. For instance the first colour image can be present in an interleaved data format. After conversion into the second colour image this for instance is present equally in the interleaved data format. If the second colour image is converted by a further conversion into a non-interleaved data format and subsequently again into an interleaved data format, the multiply converted second colour image despite the repeated converting can be in particular completely re-converted, and in particular in the way in which it was originally present as the first colour image. If the first colour image is not converted into the second colour image, but immediately from the interleaved data format into the non-interleaved data format and subsequently from the non-interleaved data format into the interleaved data format, the first colour image commonly cannot be generated anymore as originally given.

The invention also relates to a camera system for a motor vehicle comprising a camera and an image processing unit, which is configured to perform a method according to the invention.

A motor vehicle according to the invention, in particular a passenger vehicle comprises a camera system according to the invention.

Moreover, the invention in a further independent aspect also relates to a method for converting a first colour image into a second colour image. As first colour image an environmental area of the motor vehicle is captured by a camera of the motor vehicle. Of the first colour image a bit is determined, which contributes to the characterization of a pixel of the first colour image, wherein the bit has a first bit value or a second bit value that differs from the first bit value. An essential idea of this aspect is that during conversion into the second colour image in particular a memory area expansion of the second colour image in comparison with the first colour image is performed and that the bit is represented by at least one byte of the second colour image.

This means that the respective bit of the first colour image is characterized or saved as the at least one byte of the second colour image. But it is not necessary that every bit of the first colour image is assigned to a byte of the second colour image. For instance certain bytes of the second colour image can also be set with a constant. The image information of the first colour image thus can be saved bitwise in the second colour image. By the saving in the second colour image the image information can undergo various image transformations. For instance a transformation from a YUV422 data format to an RGB888 data format and back again to a YUV422 data format without a loss of image information occurring. The image information of the first colour image thus can be maintained or effectively restored even after repeated transformation of the second colour image.

Embodiments of the first independent aspect concerning the method are to be considered as advantageous embodiments of the second aspect of the method.

The embodiments presented with reference to the method according to the invention and their advantages apply in analogy to the camera system according to the invention as well as for the motor vehicle according to the invention.

Further features of the invention derive from the claims, the figures, and the description of the figures. The features and feature combinations previously mentioned in the description as well as the features and feature combinations shown in the following in the description of the figures and/or in the figures alone can be used not only in the respective indicated combination, but also in other combinations or taken alone, without leaving the scope of the invention. Thus, also embodiments of the invention are to be considered as comprised and disclosed that are not explicitly shown and set out in the figures, but derive or can be generated through separated feature combinations from the explained embodiments. Also embodiments and feature combinations are to be considered as disclosed that have not all features of an originally formulated independent claim.

In the following embodiments of the invention are set out in more detail with reference to schematic drawings.

There show:
- Fig. 1: in a schematic top view an embodiment of a motor vehicle according to the invention with a camera system;
- Fig. 2: in a schematic representation a conversion from a first colour image into a second colour image;
- Fig. 3: in a schematic representation a conversion from the first colour image into the second colour image, wherein the first colour image and the second colour image are present in a YUV422 data format; and
- Fig. 4: in a schematic representation a conversion from the first colour image into the second colour image, wherein the second colour image is characterized by a first colour value and a second colour image.

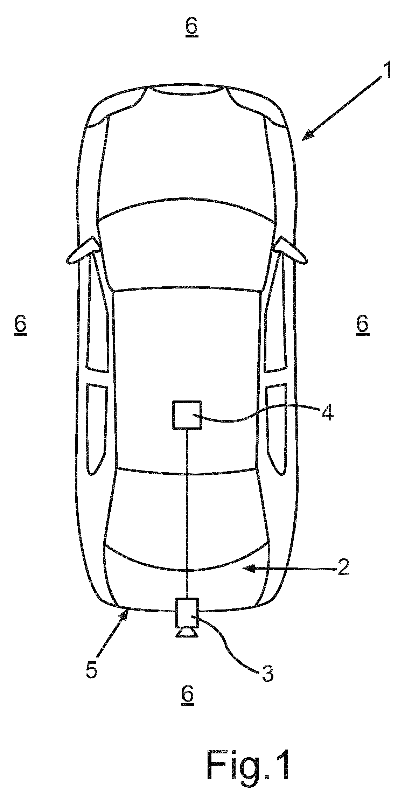

Fig. 1 shows a schematic top view of a motor vehicle 1 with a camera system 2 according to an embodiment of the invention. The camera system 2 in the embodiment comprises a camera 3 and an image processing unit 4. The camera 3 according to the embodiment is arranged at a rear 5 of the motor vehicle 1. The arrangement of the camera 3, however, is possible in a plurality of ways, but preferably in such a way that an environmental area 6 of the motor vehicle 1 can be captured. In particular, also a plurality of cameras 3 is provided. The plurality of cameras 3 is arranged in such a way that the environmental area 6 around the motor vehicle 1 can be fully captured. The image processing unit 4 according to the embodiment is centrally arranged at the motor vehicle 1. The image processing unit 4 therefore can also be integrated within the camera 3 or else be designed as a separate unit and be randomly arranged at the motor vehicle 1.

The camera 3 is a CMOS camera (complementary metal-oxide-semiconductor) or a CCD camera (charge-coupled device) or any random image capturing device, which is capable of providing a single image of the environmental area 6 of the motor vehicle 1. The camera 3 is in particular a video camera, which continuously provides an image sequence of single images (frame). The image processing unit 4 then processes in particular the image sequence of the frames for instance in real time.

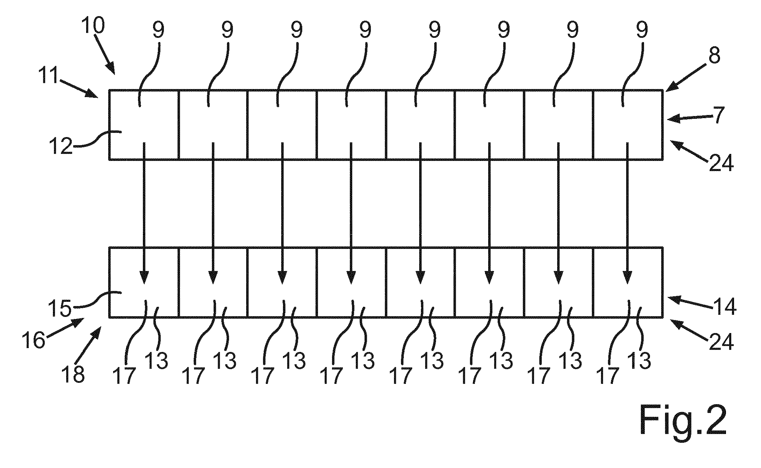

Fig. 2 shows a first colour image 7, which is for instance is provided by the camera 3. The first colour image 7 comprises in particular a colour channel 8. The first colour image 7 is represented in such a way that a bit 9 of the first colour image 7 has been determined. According to the embodiment of Fig. 2 the bit 9 in the first colour image 7 has been determined eight times. This means that the bit 9 is determined by viewing or running through the first colour image 7 bitwise or is passed through bit by bit and for each bit 9 a first bit value 10 or a second bit value 11 is determined. The bit 9 is to be understood as measuring unit for the data quantity of digitally represented data or for the first colour image 7. The bit 9 uses binary element states and therefore in particular exclusively has the first bit value 10 and the second bit value 11. The first colour image 7, however, is no binary image.

The first colour image 7 consequently is converted according to Fig. 2 by converting the bit 9 in a first position 12 into a byte 13 of a second colour image 14 in a first position 15 of the second colour image 14. The second colour image 14 according to the embodiment comprises the colour channel 8. The byte 13 of the second colour image according to the embodiment consists in particular of eight bits. The bit 9 in the first position 12 of the first colour image 7 accordingly after conversion is represented by the byte 13 in the first position 15 of the second colour image 14. The bit 9 consequently in dependency on the first bit value 10 or the second bit value 11 is assigned a first colour value 16 of a colour pixel 17 of the second colour image 14 or a second colour value 18 of the colour pixel 17.

According to Fig. 2 the colour pixel 17 is characterized by the byte 13. Preferably, however, it is envisaged that the colour pixel 17 is characterized by several bytes 13 of the second colour image 14. The colour pixel 17 can also be referred to as "pixel" or image element. As shown in the present case in Fig. 2, the conversion of the data quantity of the second colour image 14 has the effect that the second colour image 14 is eight times as large as the first colour image 7. The reason is that the byte 13 contains eight times a bit. This means that the bit 9 according to the embodiment of Fig. 2 is described by eight times a bit - the byte 13 - of the second colour image 14. In the embodiment of Fig. 2 the second colour image 14 has only one colour channel 8. Thus each byte 13 stands for the respective corresponding colour pixel 17.

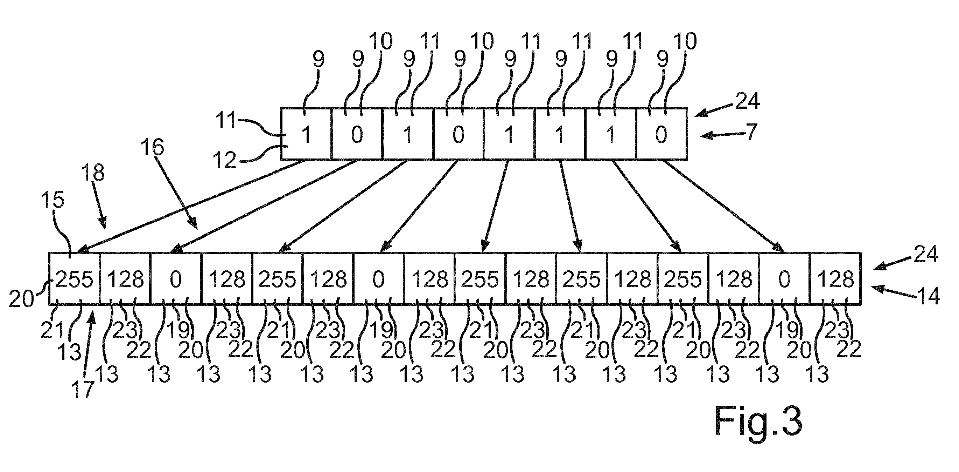

Fig. 3 shows the first colour image 7 with each the first bit value 10 and the second bit value 11. The first colour image 7 according to the embodiment is composed of eight bits 9. Each bit 9 of the first colour image 7 is assigned the respective byte 13. For the first bit value 10 a first byte value 19 of the first byte 20 is assigned. For the second bit value 11 a second byte value 21 of a first byte 20 is assigned. The first byte 20 of the second colour image 14 is in particular positioned at an odd position number of the respective byte 13 of the second colour image 14. The second colour image 14 for instance is present in a YUV422 data format and in particular has a colour depth of eight bit and three colour channels 8. Thus in the respective byte 13 of the second colour image 14 in an odd position, i.e. for instance in the first or the third or the fifth position of the byte 13 a brightness value of a Y channel of the YUV422 data format is stored. In contrast thereto, in an even position of the respective byte 13 of the second colour image 14 a chrominance value, i.e. a U channel or a V channel of the YUV422 data format is saved. According to the embodiment of Fig. 3 in the even position of the byte 13 a second byte 22 of the second colour image 14 is set. The second byte 22 has a third byte value 23. The third byte value 23 according to the embodiment is a predetermined constant and is characterized by the value 128.

According to the embodiment of Fig. 3 the second colour image 14 with regard to the file size or the data quantity is 16 times larger than the first colour image 7. This factor 16 is rendered, because each bit 8 of the first colour image 7 is characterized by the byte 13, thus rendering a factor 8. Moreover, after each first byte 20 the second byte 22 is added to the second colour image 14. Thus, normally a factor 2 is rendered. The factor 8 multiplied by the factor 2 renders the final factor 16.

In case the second colour image 14 according to Fig. 3 is given in the YUV422 data format, the colour pixel 17 of the second colour image 14 is characterized once by the first byte 20 and once by the immediately adjacent second byte 22. Two of the immediately adjacent bytes 13 consequently render the colour pixel 17.

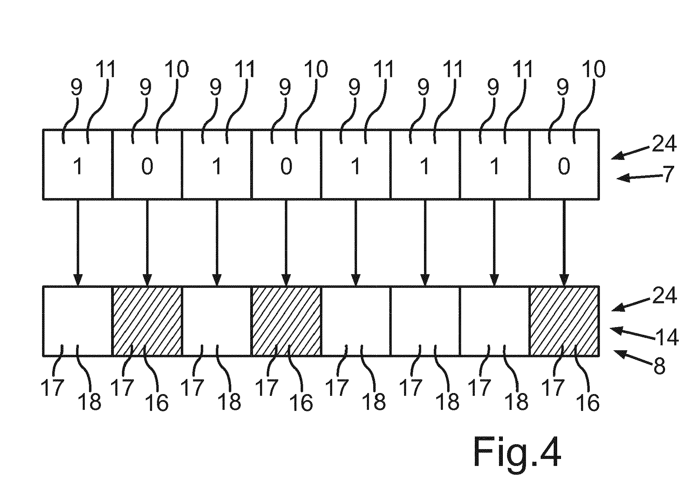

Fig. 4 does not show the second colour image 14 byte-wise as Fig. 3, but colour-pixelwise. The colour pixel 17 consequently is characterized by the first byte 20 and the second byte 22. The first bit value 10, which for instance can be 0, is characterized by the first colour value 16, which for instance can be black. In analogy thereto the second bit value 11 can for instance be 1 and be described by the second colour value 18, which for instance can be white. Fig. 4 consequently shows how the bits 9 of the first colour image 7 after conversion into the second colour image 14 can be described by the first colour value 16 or the second colour value 18.

By the conversion of the first colour image 7 into the second colour image 14 the image information of the first colour image 7 can be saved in the second image 14 in such a way that after a further conversion or transformation of the second colour image 14 into a different data format, for instance an RGB888 data format, and a re-conversion into the YUV422 data format the image information of the first colour image 7 is maintained. The reason is that for instance the first colour image 16 and the second colour image 18 in the further conversion remain unchanged. However, it is necessary to know the encoding by which the first colour image 7 was converted into the second colour image 14. On the basis of the encoding the first colour image 7 can be restored without any loss from the second colour image 14 or a colour image 14 that has been converted several times into other data formats. The RGB888 data format is a non-interleaved data format, in which the respective colour channel occupies a memory area each of one byte for every colour pixel 17. The respective colour pixel 17 in Fig. 4 has a plurality of colour channels 8.

The encoding regulation provides a rule, by which the first colour image 7 is converted into the second colour image 14 and/or by which the first colour image 7 can be re-converted from the second colour image 14. The re-conversion consequently means that on the basis of the second colour image 14 or the further colour image, which has derived from the further conversion of the second colour image 14 and for instance has been present in the RGB888 data format in the meantime, the first colour image 7 can be reproduced.

Both the first colour image 7 as well as the second colour image 14 are limited with regard to conversion to a respective data area 24. The data area 24 is the area of the image file which contains no meta data or other non-image information but the pure visible image information.

## Claims

1. A method for converting a first colour image (7) into a second colour image (14),
wherein as first colour image (7) an environmental area (6) of a motor vehicle (1) is captured by a camera (3) of the motor vehicle (1), and of the first colour image (7) a bit (9) is determined, which contributes to the characterization of a pixel of the first colour image (7) and has a first bit value (10) or a second bit value (11) that differs from the first bit value (10),
**characterized in that**
during conversion into the second colour image (14) the bit (9) with the first bit value (10) is determined as first colour value (16) of a colour pixel (17) of the second colour image (14) and/or the bit (9) with the second bit value (11) is determined as second colour value (18) of the colour pixel (17) of the second colour image (14).

2. The method according to claim 1,
**characterized in that**
the first colour value (16) of the colour pixel (17) of the second colour image (14) is characterized as black colour value and/or the second colour value (18) of the colour pixel (17) of the second colour image (14) is characterized as a white colour value.

3. The method according to claim 1 or 2,
**characterized in that**
the colour pixel (17) of the second colour image (14) is **characterized by** a memory area of at least one byte, in particular the bit (9) of the first colour image (7) after conversion is **characterized by** the at least one byte (13) of the second colour image (14).

4. The method according to any one of the preceding claims,
**characterized in that**
the first colour image (7) is run through bitwise until the bits (9) of the first colour image (7) are characterized at least partly by respective colour pixels (17) of the second colour image (14).

5. The method according to any one of the preceding claims,
**characterized in that**
the first colour image (7) and/or the second colour image (14) is **characterized by** a plurality of colour channels (8).

6. The method according to any one of the preceding claims,
**characterized in that**
the first colour image (7) and/or the second colour image (14) is provided in a YUV colour model and/or in an interleaved data format, in particular in a YUV422 data format.

7. The method according to any one of the preceding claims,
**characterized in that**
a first byte (20) of the second colour image (14) for the first colour value (16) is assigned a first byte value (19) or the first byte (20) of the second colour image (14) for the second colour value (18) is assigned a second byte value (21) that differs from the first byte value (19).

8. The method according to claim 7,
**characterized in that**
a second byte (22) of the second colour image (14) is assigned a third byte value (23), which in terms of its value lies between the first byte value (19) and the second byte value (21).

9. The method according to claim 8,
**characterized in that**
the third byte value (23) is **characterized by** a predetermined constant.

10. The method according to any one of claims 7 to 9,
**characterized in that**
the second colour image (14) is generated by first adding the first byte (20) in a data area of the second colour image (14) and adding immediately adjacent thereto the second byte (22) to the data area.

11. The method according to any one of claims 7 to 10,
**characterized in that**
the first colour image (7) is run through bitwise, and the respective bit (9) of the first colour image (7) is added as the respective first byte (20) of the second colour image (14) to the second colour image (14).

12. The method according to any one of the preceding claims,
**characterized in that**
the second colour image (14) after conversion of the first colour image (7) into the second colour image (14) is transformed into an RGB colour model and/or into an RGB888 data format.

13. The method according to any one of the preceding claims,
**characterized in that**
the second colour image (14) after conversion of the first colour image (7) is reconverted into the second colour image (14) on the basis of an encoding regulation into the first colour image (7).

14. A camera system (2) for a motor vehicle (1), comprising a camera (3) and an image processing unit (4) configured to perform a method according to any one of the preceding claims.

15. A motor vehicle (1) comprising a camera system (2) according to claim 14.
